(19) Europäisches Patentamt
European Patent Office
Office européen des brevets

(11) **EP 4 604 468 A1**

(12) **EUROPEAN PATENT APPLICATION**

(43) Date of publication:
   **20.08.2025 Bulletin 2025/34**

(21) Application number: **24305273.5**

(22) Date of filing: **16.02.2024**

(51) International Patent Classification (IPC):
   **H04L 27/02** *(2006.01)*    **H04L 27/26** *(2006.01)*

(52) Cooperative Patent Classification (CPC):
   **H04L 27/2602; H04L 27/02; H04L 27/2636;**
   **H04L 27/2697**

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **GE KH MA MD TN**

(71) Applicant: **Eurecom**
   **06410 Biot (FR)**

(72) Inventors:
   • **WAGNER, Sebastian**
     **06410 BIOT (FR)**
   • **KNOPP, Raymond**
     **06410 BIOT (FR)**

(74) Representative: **Atout PI Laplace**
   **Immeuble Up On**
   **25 Boulevard Romain Rolland**
   **CS 40072**
   **75685 Paris Cedex 14 (FR)**

(54) **MULTI-CARRIER ON-OFF KEYING (MC-OOK)**

(57)    Thereis provided a transmitter (4) configured to transmit a message $m = 0,1, \ldots , 2^B - 1$ from an input bit vector $b$ comprising $B$ input bits $b_i$ through a communication channel, the transmitter comprising:
- an encoding unit (101) comprising an encoder (1010) configured to encode the $B$ bits on the input bit vector, which provides $C$ coded bits forming an encoded vector $c$;
- A waveform modulation unit (102) configured to modulate the $C$ coded bits delivered by the encoding unit (101) onto $L$ consecutive OFDM symbols, each carrying $M$ OOK symbols, $M$ corresponding to the number of OOK symbols per OFDM symbol;
- a resource mapping unit (104) configured to map the modulated signal delivered by the waveform modulation unit to frequency-domain resources $X_m$ of $N$ sub-carriers;

- an OFDM modulation unit (105) configured to apply OFDM modulation to the resulting signal $X_m$, which provides a time-domain base-band signal $x_m(t)$,

the transmitter (4) being configured to send a OFDM transmission derived from the signal $x_m(t)$ determined by the OFDM modulation unit (105) on sub-carriers, using one or more transmit antennas, wherein said OFDM transmission comprises one or more OOK symbols and OFDM symbols,
wherein the encoding unit (101) further comprises a Pulse Interval Coding (PIE) unit configured to apply a Pulse Interval Encoding (PIE) to the coded bits delivered by the encoder (1010) to map one PIE pulse to one OOK symbol.

FIGURE 7A

EP 4 604 468 A1

**Description**

**TECHNICAL FIELD**

The disclosure generally relates to wireless communications networks and in particular to device and a method for generating encoding and modulating a signal to be received by a passive receiver.

**BACKGROUND**

Many technical challenges have arisen to enable the transition of Mobile communication systems from the 4th generation (4G) mobile communication system to the future 5th generation (5G) mobile communication systems and beyond generations. In particular, 5G New Radio (5G NR) technology is being standardized to provide rich, reliable and hyper-connected communications.

A communications system forms a network comprising base stations providing radio coverage over a geographical area forming a cell. The cells serve User Equipments (UE) through the base stations. A User equipment can communicate using base stations. A user equipment transmit data over an air or radio interface to the base stations in uplink (UL) transmissions and radio base stations transmit data over an air or radio interface to the user equipments in downlink (DL) transmissions.

The communication system comprises at least one transmitter that transmits a plurality of information symbols as a modulated Radio Frequency (RF) waveform to a receiver device through a transmission channel. The receiver device receives the conveyed signal conveyed by the transmitter and decodes the received signal for recovering the original data. In some applications, it is desirable to use passive receivers. A passive receiver (PR) has no independent source of power and no means to store substantial amounts of energy. Therefore, if a transmitter sends data to a passive receiver, the transmitted modulated Radio Frequency (RF) waveform itself is used by the passive receiver to extract the power to operate the receiver and decode the data.

By design, passive receivers are simple, low-complexity devices and consequently can only receive/decode simple modulation schemes such as amplitude modulation (AM). A special case of amplitude modulation is On-Off Keying, where the pattern of switching the signal ON and OFF conveys the information. On-off keying (OOK) modulation represents digital data as the presence (ON) of a carrier wave (the RF signal is transmitted) or the absence (OFF) of a carrier wave (the RF signal is not transmitted). The presence of a carrier (ON) for a specific duration represents a binary one, while the absence of a carrier (OFF) for the same duration represents a binary zero.

As a result, the passive receiver cannot extract energy when the RF signal is not transmitted (OFF). Therefore, long periods of zeros (OFF) have to be avoided when transmitting data.

There is according a need for an improved transmitter device and transmission method capable of generating an encoded ON-OFF Keying waveform that prevents long periods of zeros, thereby limiting the periods where a passive receiver cannot operate.

**Summary**

To address these and other problems, there is provided a wireless device in a communication system, the wireless device comprising a transmitter configured to transmit a message $m = 0, 1, \ldots, 2^B - 1$ from an input bit vector $b$ comprising $B$ input bits $b_i$ through a communication channel using single or multi-carrier modulation, the transmitter comprising a set of transmit antennas. In some aspects, the transmitter comprises:

- an encoding unit comprising an encoder configured to encode the $B$ bits on the input bit vector, which provides $C$ coded bits forming an encoded vector $c$;

- A waveform modulation unit configured to modulate the $C$ coded bits delivered by the encoding unit onto $L$ consecutive OFDM symbols, each carrying $M$ OOK symbols, $M$ corresponding to the number of OOK symbols per OFDM symbol;

- a resource mapping unit configured to map the modulated signal delivered by the waveform modulation unit to frequency-domain resources $X_m$ of $N$ sub-carriers;

- an OFDM modulation unit configured to apply OFDM modulation to the resulting signal $X_m$, which provides a time-domain base-band signal $x_m(t)$.

The transmitter is configured to send a OFDM transmission derived from the signal $x_m(t)$ determined by the OFDM modulation unit on sub-carriers, using one or more transmit antennas, the OFDM transmission comprising one or more OOK symbols and OFDM symbols. The encoding unit further comprises a Pulse Interval Coding (PIE) unit configured to apply a Pulse Interval Encoding (PIE) to the coded bits delivered by the encoder to map one PIE pulse to one OOK symbol.

In some aspects, the waveform modulation unit may comprise a Multi-Carrier On-Off Keying (MC-OOK) modulator configured to apply a MC-OOK modulation to the output of the encoding unit, which provides a MC-OOK sequence $s_m$ for the message $m$, the signal $s_m$ comprising $B$ elements $s_i$.

In some embodiments, he MC-OOK modulator may be configured to map a ON-signal $a$ comprising $K_B$ elements such as $a = [a_0, a_1, ..., a_{KB-1}]$ to each element $s_i$ of the MC-OOK modulated signal $s_m$ whenever the corresponding input bit $b_i$ is equal to one, and a zero value otherwise, the ON-signal a being a complex sequence.

In some embodiments, the waveform modulation unit may comprise a Discrete Fourier Transform (DFT) precoder configured to apply DFT-precoding to the signal $s_m$, which provides a resulting signal $S_m$.

In some aspects, the transmitter may be configured to modify the last OOK symbol of length $K_B$ sampled in time-domain in the OFDM transmission.

In some embodiments, the transmitter mey be configured to modify the last $K_Z = \left\lceil \dfrac{N_{CP}}{Z} \right\rceil$ samples of the $K_B$ samples of the last OOK symbol within an OFDM symbol, with $N_{CP}$ designating the number of cyclic prefix samples inserted at the beginning of the OFDM symbol after the OFDM modulation.

The last $K_Z$ samples of the last OOK symbol within the OFDM symbol may be modified to be non-zero.

The value of the non-zero sequence may be selected according to target spectral properties.

In some aspects, the PIE may be selected such that a ON duration is followed by a single OFF period, independently of the number of OOK symbols per OFDM symbol. The OOK modulator may be configured to insert a sequence to the end of the last OOK symbol.

The OOK modulator may be configured to insert first $K_z$ samples of the ON-signal to the end of the last OOK symbol.

The OOK modulator may be configured to use part of an already existing sequence comprising the samples of the ON-signal.

In some embodiments, the OOK modulator may be configured to only insert first $K_z$ samples of the ON-signal to the end of the last OOK symbol, if the last OOK symbol is an OFF signal.

In some embodiments, the OOK modulator may be configured to insert randomly modulated symbols to the end of the last OOK symbol, the randomly modulated symbols being symbols modulated according to a modulation technique such as a Quadrature Amplitude Modulation QAM or a Binary Phase-Shift Keying BPSK technique.

There is further provided a method implemented in a communication system, for transmitting a message $m = 0,1, ... , 2^B - 1$ from an input bit vector $b$ comprising $B$ input bits $b_i$ through a communication channel using single or multi-carrier modulation. The method comprises:

- encoding the $B$ bits on the input bit vector, which provides $C$ coded bits forming an encoded vector $c$;

- modulating the output of the encoding step onto $L$ consecutive OFDM symbols, each carrying $M$ OOK symbols, $M$ corresponding to the number of OOK symbols per OFDM symbol;

- mapping the modulated signal delivered by modulation step to frequency-domain resources $\boldsymbol{X}_m$ of $N$ sub-carriers;

- applying OFDM modulation to the resulting signal $X_m$, which provides a time-domain base-band signal $\boldsymbol{x}_m(t)$.

The method comprising sending an OFDM transmission derived from the signal $\boldsymbol{x}_m(t)$ determined in the OFDM modulation step on sub-carriers, using one or more transmit antennas, the OFDM transmission comprises one or more OOK symbols and OFDM symbols. The encoding step further comprises a step of applying a Pulse Interval Encoding (PIE) to the coded bits c to map one PIE pulse to one OOK symbol.

**Brief description of the drawings**

The accompanying drawings, which are incorporated in and constitute a part of this specification, illustrate various embodiments of the disclosure together with the general description of the disclosure given above, and the detailed description of the embodiments given below. In the drawings:

- Figure 1 represents an exemplary communication system in which embodiments of the present disclosure may be implemented.

- Figure 2 is a block diagram representing the transmission of a message comprising a plurality of information symbols from a transmitter to a receiver.

- Figure 3 depicts the time-domain structure of a conventional OFDM transmission sent by a transmitter.

- Figure 4 is a block diagram representing the structure of the transmitter, according to some embodiments.

- Figure 5 is a block diagram representing a Waveform Modulation unit, according to some embodiments.

- Figure 6 is a block diagram representing a DFT-precoder, according to an exemplary embodiment.

- Figure 7A is a block diagram of the transmitter representing the Pulse Interval Coding unit according to some embodiments.

- Figure 7B depicts an exemplary of a Pulse Interval Encoding (PIE), according to some embodiments.

- Figure 8 is a diagram representing a waveform received at the receiver device, after Radio Frequency (RF) filtering with data-dependent data-rate, according to an exemplary embodiment.

- Figure 9 is a diagram representing an example of a waveform received by the receiver applying the PIE of figure 7.

- Figure 10 is a table presenting simulation assumptions used to simulate the performance of the transmitter according to some embodiments of the invention.

- Figure 11 is a diagram showing the BLER performance in an AWGN channel with respect to the SNR (in dB) for different embodiments of the invention.

- Figure 12 is a flowchart depicting a method for generating and transmitting a PIE encoded waveform at the transmitter, according to embodiments of the invention.

- Figure 13 represents a passive receiver according to embodiments of the invention.

- Figure 14 is a flowchart depicting a method for receiving a message from the transmitter at the receiver.

**Detailed description**

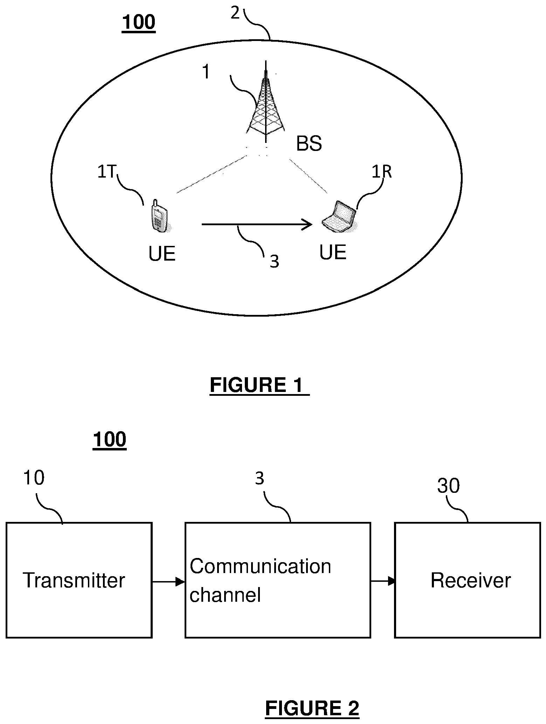

Referring to Figure 1, there is shown an exemplary communication system 100 in which embodiments of the present disclosure may be implemented.

The communication system 100 comprises one or more wireless devices 1 that include user terminals UE (also referred to as User Equipments UEs, according to 3GPP standard), and one or more base stations BS (also referred to as a Node, designated by a derivative of the term 'NodeB' such as gNodeB node or gNB in 5G NR). A user equipment UE may act as a transmitter device (or 'transmitter') configured to send data to one or more other user devices 1 acting as receiver devices (or 'receivers') through a mobile communication network 2. The base station BS is associated with a cell defining a geographical cell area. The cell associated with the base station BS is served by the base station. Numeral reference 1 will be generally used to refer to a wireless device that can be a user equipment UE or a base station BS.

The communication system 100 may be for example a wireless communication system such as a new radio (NR), a 5G and beyond 5G network.

Although reference will be mainly made to 3GPP network in the following description, the skilled person will readily understand that the embodiments of the disclosure also apply to similar or equivalent networks, such as a successor of the 3GPP network. In the following description, enclosed drawings and appended claims, the use of the term 3GPP and terms related to the 3GPP network should be interpreted accordingly. Similarly, although reference will be made to 5G NR, for illustration purpose, such reference should be interpreted as encompassing any future xG network (6G and beyond) having similar functional components.

A wireless device 1 may be fixed or mobile and/or may be remotely monitored and/or controlled. A wireless device 1 may be equipped with power sources that provide power to the different components ensuring the UE operation.

In an application of the disclosure to wireless communication systems such as adhoc wireless networks used in local area communications, wireless sensor networks and radio communication systems (e.g. LTE, LTE-advanced, 5G and beyond), the wireless device 1 may be any type of fixed or mobile wireless device configured to operate in a wireless environment.

A user equipment UE may be, without limitation, a mobile phone, a computer, a laptop, a tablet, a drone, an IoT device, etc.

The communication network 2 may be any wireless network enabling IoT. Exemplary wireless networks comprise low-power short range networks and LPWANs.

Further, the communication network 2 may accommodate several pairs of user equipments UE. In such embodiments, multiple access techniques and/or network coding techniques may be used in combination with error correction codes and modulation. Exemplary multiple access techniques comprise without limitation Time Division Multiple Access (TDMA), Frequency Division Multiple Access (FDMA), Code Division Multiple Access (CDMA), and Space Division Multiple Access (SDMA), and Non-Orthogonal Multiple Access (NOMA) technology.

A wireless device 1 (user equipment UE or base station BS) may be equipped with a plurality of transmit and/or receive antennas, and may implement space-time coding and/or space-time decoding techniques which may be used in combination with coded modulations for encoding data both in the time and space dimensions.

A wireless device 1 may be implemented or used as a transmitter device 1T (also called 'transmitter'), in which case it is configured to generate and transmit a data packet to one or more wireless devices 1R. Alternatively, the wireless device 1 may be implemented or used as a receiving device (also called 'receiver') 1R, in which case it is configured to receive and process a data packet.

A wireless device 1 implemented or used as a transmitter device (or 'transmitter) will be designated hereinafter by the reference 10. A wireless device 1 implemented or used as a receiving device (or receiver) will be designated hereinafter by the reference 30.

Figure 2 is a block diagram representing the transmission of a message comprising a plurality of information symbols from a transmitter 10 to a receiver 30, through a communication channel 3, in the communication system 100.

The receiver 30 is configured to receive the signal transmitted by the transmitter 10 in the communication system 100 and decode the received signal to recover the original data.

The communication channel 3 may be any communication channel adapted to transmit information symbols from the transmitter 10 to another wireless device acting as a receiver 30 in the communication system 100, depending on the type of the communication system, such as for example a wireless medium. The communication channel 3 may be any wireless propagation medium adapted to such devices.

The communication channel 3 may be a multipath channel using single-carrier or multi-carrier modulation formats such as OFDM (Orthogonal Frequency Division Multiplexing) for mitigating frequency-selectivity, interference and delays.

The communication channel 3 may be a noisy channel. For example, the noise may result from the thermal noise of the system components and/or the intercepted interfering radiation by antennas. The total noise may be modeled by an additive white Gaussian noise (AWGN).

The communication channel 3 may for example represent any wireless network enabling IoT. Exemplary wireless networks 2 comprise low-power short range networks and LPWANs. Exemplary LPWAN technologies comprise LTE-M and NB-IoT.

In some aspects the receiver may be a Low-power receiver such as a passive receiver (PR), which is a receiver deprived of any independent source of power and of any means to store substantial amounts of energy. Such receiver 30 is configured to use the waveform itself received from the transmitter 10 to operate the receiver and decode the data received from the transmitter 10.

In some aspects, the transmitter 10 may use multi-carrier (MC) On-Off Keying (OOK) modulation and single or multi-carrier modulation, such as OFDM modulation (OFDM is the acronym for 'Orthogonal Frequency-Division Multiplexing') for encoding and modulating a binary message $m$ to be transmitted to the receiver 30 on multiple carrier frequencies, through the communication channel 3.

The message m is defined by $m = 0, 1, \ldots, 2^B - 1$ from input bits $b = [b_0, b_1, \ldots, b_{B-1}]$ comprising $B$ bits $b_i$, $i = 0, 1, \ldots, B - 1$.

The following description of some embodiments of the invention will be made mainly with reference to single or multi-carrier modulation of OFDM type for illustration purpose only although the invention applies to other equivalent single-carrier or multi-carrier modulation.

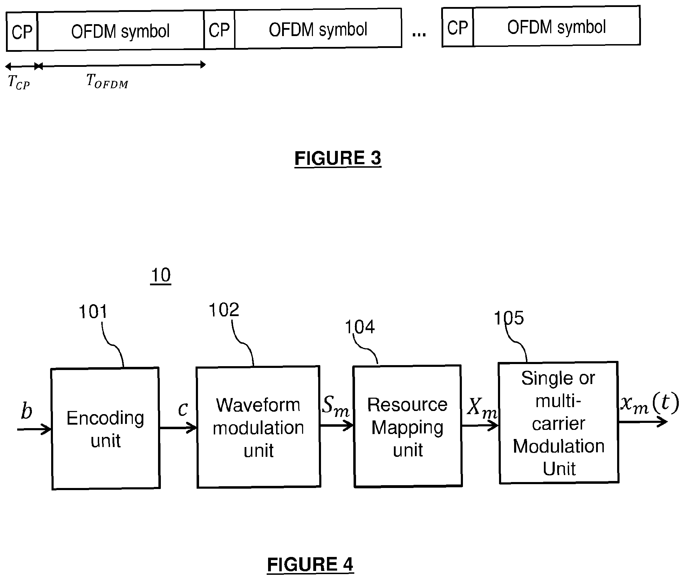

Figure 3 depicts the time-domain structure of a conventional OFDM transmission sent by a transmitter. The OFDM symbol has a duration of $T_{OFDM}$ which is given by the sub-carrier spacing (SCS) $\Delta f$ as $T_{OFDM} = 1/\Delta f$ and is preceded by the Cyclic Prefix (CP) of duration $T_{CP}$. The $T_{CP}$ duration may not be the same for every OFDM symbol and depends on the symbol number within a slot.

It is considered that $K$ out of $N$ sub-carriers are allocated for OOK transmission. In the simple case of multi-carrier OOK, all $K$ sub-carriers are either used for transmission (if logical 1 is transmitted) or not used (if 0 is transmitted). In the prior art, when '1' is transmitted, the receiver will receive a signal (and hence power) over the full symbol duration $T_{CP} + T_{OFDM}$. However, it will receive no power if '0' is transmitted. Therefore, for long transmissions of 0's, the receiver cannot operate since no power is available. Hence, it is desirable to avoid long periods of 0's.

The transmitter 10 according to the embodiments of the disclosure is configured to use Pulse Interval Encoding PIE for a multi-carrier ON-OFF Keying (OOK) OFDM transmission to prevent long periods of zeros, thereby limiting the periods where the receiver cannot operate.

The inventors have indeed found out that using Pulse Interval Encoding (PIE), which is conventionally applied in the field of RFID (radio frequency identification), enables limiting the periods where the receiver 30 cannot operate.

Pulse Interval Encoding (PIE) is used in the field of RFID to code a binary '1' as a longer full-power interval, and a binary '0' as a shorter full-power interval with the same power-off pulse, before modulation in order to have the RFID reader power on as much as possible to power the RFID tag, as disclosed for example in GS1 EPC global Inc., "EPC™ Radio-Frequency Identity Protocols Generation-2 UHF RFID, Specification for RFID Air Interface, Version 2.0.0 Ratified," GS1, 2013. Using equal low and high pulses for a '0' ensures that at least 50% of the maximum power is delivered to the RFID tag even when the data being transmitted contains long strings of zeros. In this case, the data rate becomes dependent on the data itself, and all zeros transmit faster than all ones. In this case, the data rate becomes dependent on the data: a stream of binary 0s will be transmitted more rapidly than a stream of binary 1s.

The transmitter 10 according to the embodiments of the disclosure enables efficiently generating a PIE encoded waveform in an OFDM transmission.

Figure 4 is a block diagram representing the structure of the transmitter 10, according to some embodiments.

In the following description of some embodiments, it is considered that a narrowband Multi-Carrier On-Off Keying (MC-OOK) transmission with $K$ sub-carriers is used, where the received vector of a modulation symbol $l$ on receive antenna $p$ of the receiver 30 is given by:

$$ r_{l,p} = H_{l,p} F s_{l,m} + n_{l,p} \quad (1) $$

In equation (1), $s_{l,m}$ designates the transmit signal for the message m, $H_{l,p}$ is defined by $H_{l,p} = \mathrm{diag}(h_{l,p,1}, h_{l,p,2}, \dots , h_{l,p,K})$, $h_{l,p,k}$ represents the complex channel coefficient on sub-carrier $k$, $k = 1,2, \dots, K$ and $F$ is the DFT (Discrete Fourier Transform) matrix of size $K$. The noise vector $n_{l,p} = [n_{l,p,1}, n_{l,p,2}, \dots , n_{l,p,K}]$ is assumed to be independent and identically distributed (i.i.d.) complex Gaussian with zero mean and variance $\sigma^2$, i.e. $n_k \sim NC(0, \sigma^2)$.

It is assumed that the receiver 30 detects only the start of the received message and has knowledge of the length of the OOK symbols and length of the OFDM symbol. The receiver hence accumulates power of the ON duration before resetting the circuitry and accumulates power for the next OOK symbol duration.

The transmitter 10 is configured to receive the $b = [b_0, b_1, \dots , b_{B-1}]$ input bits corresponding to the message $m = 0,1, \dots , 2^B - 1$.

The transmitter 10 comprises an encoding unit 101 comprising an encoder 1010 configured to encode a message $m = 0,1, \dots , 2^B - 1$ comprising the $B$ information bits $b = [b_0, b_1, \dots , b_{B-1}]$, which provides C coded bits defined as $c = [c_0, c_1, \dots , c_{C-1}]$.

The transmitter 10 comprises a waveform modulation unit 102 configured to modulate the output of the encoding unit 101 onto $L$ consecutive modulation symbols (OFDM symbols), each carrying $M$ OOK symbols. $M$ therefore corresponds to the number of OOK symbols per OFDM symbol.

The waveform modulation unit 102 is configured to provide a signal in frequency-domain $S_m$ of message $m = 0,1, \dots , 2^B - 1$ from the modulated bits.

The transmitter 10 also comprises a Resource Mapping unit 104 configured to map the signal in frequency-domain $S_m$ of message $m = 0,1, \dots , 2^B - 1$ to the overall resources $X_m$ of $N$ sub-carriers.

The transmitter 10 further comprises a single or multicarrier modulator 105 configured to map the resulting signal $S_m$ to the overall system resources by applying single or multicarrier modulation to the resulting signal $S_m$ over the entire system bandwidth, which provides a time-domain base-band signal $x_m(t)$.

The single or multi-carrier modulator 105 is configured to convert the signal $S_m$ from the time domain to the frequency domain using a modulation technique and spread the signals thus obtained over the transmission antennas of the transmitter 4.

In embodiments using OFDM modulation, the single or multicarrier modulator 105 being an OFDM modulator using an OFDM modulation technique to convert the signal $S_m$ from the time domain to the frequency domain.

Prior to signal modulation, the encoder 1010 is configured to encode the $B$ information bits $b$ to the $C$ coded bits $c$. The encoder 1010 may use at least one generator code to encode the $b$ bits based on a coding scheme for ON-OFF Keying (OOK) waveforms.

In one embodiment, the generator code used by the encoder 1010 may be a Manchester Code, the encoder 1010 applying Manchester coding to encode the $b$ bits. The Manchester code has a given rate $R$.

For example, a rate $R = 1/2$ Manchester code may be used. The encoder 1010 may then apply the rate $R = 1/2$ Manchester code to map one input bit $b'$ to the output bits $c'$ as follows:

$$c' = \begin{cases} [0,1], & b' = 0 \\ [1,0], & b' = 1 \end{cases} \quad (2)$$

In equation (2), c' denotes a codeword of length $C' \leq C$ encoding a bit sequence **b'** of length $B' \leq B$. $B'$ is the number of input bits **b'** that are jointly encoded into codeword **c'**. Hence, $B'$ bits are taken from the input bits **b** s.t.

$$b = [b'_0, b'_1, ..., b'_{\lceil B/B' \rceil}]$$ and the resulting coded bits are $$c = [c'_0, c'_1, ..., c'_{\lceil C/C' \rceil}]$$ .

The rate of the Manchester code is given by $R = \dfrac{B\prime}{2^{B\prime}}$ . Increasing $B'$ will decrease the code rate. The skilled person will readily understand that the rate of the Manchester code is not limited to rate $R = 1/2$ and can have any suitable value (such as for example rate $R = 3/8$).

For example, in some embodiments, and extended Manchester code can be used to increase performance of the DFT-precoded MC-OOK waveform generation by the transmitter 10.

Considering $B'$ input bits defined by the vector **b'** = $b_0$, $b_1$, ... , $b_{B'-1}$, the encoder 101 may apply an extended Manchester code to output corresponding coded bits **c'** = $c_0$, $c_1$, ... , $c_{N-1}$ given by:

$$\bar{c} = 2^m \quad (2')$$

In equation (2'), $m = 0,1, ... , 2^{B'} - 1$ is the message and $\bar{c}$ is the decimal representations of the codeword **c'**.

The rate of the Manchester code is given by $R = \dfrac{B\prime}{2^{B\prime}}$ . Increasing $B'$ will decrease the code rate..

Such mapping avoids long sequences of zeros where nothing is transmitted while enabling encoding of the information in the transition from 0 to 1 or 1 to 0. Therefore, instead of comparing to a threshold, the receiver device 30 receiving the message from the transmitter device 10 can compare between the 0- and the 1-part of the transmission and thus avoid complicated threshold determination.

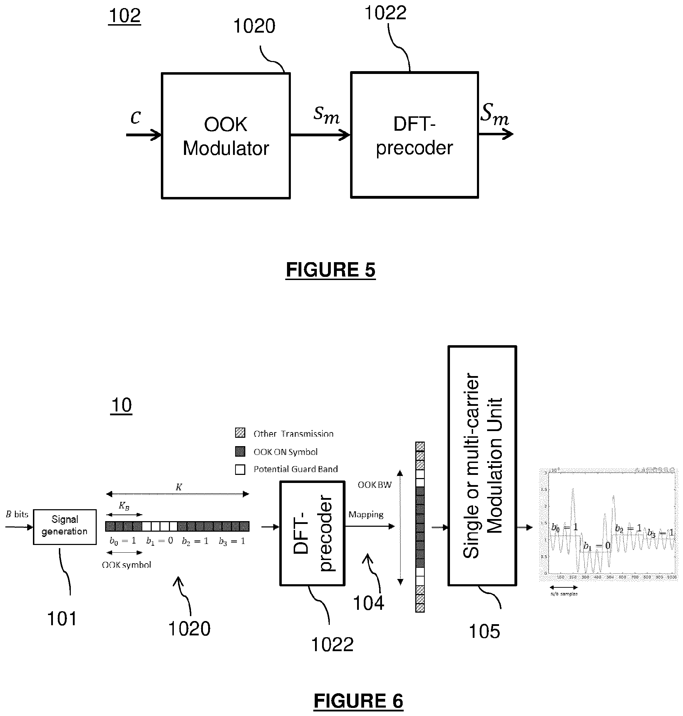

Figure 5 is a block diagram representing the Waveform Modulation unit 102 according to some embodiments. The Waveform Modulation unit 102 may comprise a OOK modulator 1020 and a DFT-precoder 1022.

The OOK-modulator 1020 is configured to apply a MC-OOK modulation to the C coded bits per OFDM symbol **c** = $[c_0, c_1, ..., c_{C-1}]$ corresponding to (coded) message $m = 0,1, ... , 2^C - 1$ delivered by the encoder 1010, which provides a OOK modulated producing signal **s**$_m$ per modulation symbol $l$ (such as OFDM symbols). **s**$_m$ therefore denotes the OOK modulated signal in time-domain for message $m = 0,1, ... , 2^B - 1$.

The MC-OOK modulated signal **s**$_m$ for a message $m = 0,1, ... , 2^B - 1$ is defined by:

$$s_m = [s_0, s_1, ..., s_{B-1}] \quad (3)$$

In equation (3), $B$ is the number of bits transmitted per OFDM symbol $l$ and **s**$_i$ = $[s_{i0}, s_{i1}, ... , s_{iKB-1}]$ with $K_B = \lfloor K/B \rfloor$ , $K_B$ representing the number of samples for sequence **s**$_i$, i = 0,1, ... , $B$ - 1. The OOK-modulator 1020 is configured to map an ON-signal **a** = $[a_0, a_1, ... , a_{KB-1}]$ to **s**$_i$ whenever the corresponding bit is one, according to equation (4):

$$s_i = \begin{cases} 0, & b_i = 0 \\ a, & b_i = 1 \end{cases} \quad (4)$$

The ON-signal a can be any complex sequence and can be different for every **s**$_i$.

For instance, the ON-signal, can be a random M-PSK symbols, a Zadoff-Chu sequence or can be a known sequence.

The signal **s**$_m$ generated by the OOK-modulator 1020 forms OOK modulated signal.

The DFT-precoder 1022 is configured to subsequently DFT-precode the signal **s**$_m$, which results in the frequency-domain sequence **S**$_m$.

The DFT-precoder 1022 is configured to take the input sequence **s**$_m$ of length $K$ and perform the DFT operation to produce a signal **S**$_m = [S_{m0}, S_{m1}, ... , S_{mK-1}]$, with $S_{mn}$ being defined according to Equation (4):

$$S_{mn} = \frac{1}{\sqrt{K}} \sum_{k=0}^{K-1} s_{mk}\, e^{-j\frac{2\pi kn}{K}} \quad (5)$$

In Equation (5), $s_{mk}$ is element $k$ of $\boldsymbol{s}_m$ and $n = 0,1, \ldots , K - 1$.

According to some aspects of the disclosure, the Waveform Modulation unit 102 is configured to apply Pulse Interval Encoding to the OOK modulation, including single OOK modulation with a single OOK symbol per OFDM symbol. A simple OOK scheme can be viewed as a special case of the DFT-precoded scheme with $M = 1$. The Waveform modulation unit 102 is advantageously adapted to achieve shorter OOK symbols.

Figure 6 is a block diagram representing the DFT-precoder 1022 according to an exemplary embodiment using $B$ = 4 bits per OFDM symbols, for illustration purpose only.

In the example of figure 6, $B = 4$, and the input bits are $\boldsymbol{b} = [b_3, b_2, b_1, b_0] = [1, 1, 0, 1]$, $m = 13$, thus $\boldsymbol{s}_{13} = [\boldsymbol{a}, \boldsymbol{a}, \boldsymbol{0}, \boldsymbol{a}]$.

A OOK symbol has a length $K_B$. Each OOK symbol comprises a number $K_B$ of samples.

In embodiments using OFDM modulation, in the Single or Multi-carrier modulation unit 105, the signal $\boldsymbol{S}_m$ is mapped to the overall transmission bandwidth, i.e. number of sub-carriers $N$, and the resulting signal $\boldsymbol{X}_m = [X_{m0}, X_{m1}, \ldots , X_{mN-1}]$ is OFDM modulated as:

$$x_m(t) = \sum_{n=0}^{N-1} X_{mn} e^{j2\pi n \Delta f(t - N_{CP}T_c)} \quad (6)$$

In Equation (6), $\Delta f$, $N_{CP}$ and $T_c$ are physical parameters related to the OFDM transmission.

In the mapping to the overall transmission bandwidth, the sub-carrier corresponding to DC subcarrier (DC stands for Direct Current) within the OOK transmission bandwidth can either be used or not used (The DC subcarrier is a subcarrier that has no information sent on it). Using the DC sub-carrier might result in a more complex receiver design to compensate for any DC impairments. If the DC sub-carrier is left unused, the corresponding modulation symbol is set to zero, i.e. $S_m(DC_{index}) = 0$ (for instance $S_{m\left(\left\lfloor\frac{K}{2}\right\rfloor+1\right)} = 0)$ .

Therefore, the output of the DFT precoder 1022 is punctured but is still the result of a contiguous DFT transform, which does not significantly impact the receiver performance. Assuming that the signal is mapped to indices $n = 0,1, \ldots , K-1$, the resource mapping unit 104 is configured to map signal $\boldsymbol{S}_m$, delivered by the Single or Multi-carrier modulation unit 105, to the DFT-precoded MC-OOK waveform $\boldsymbol{X}_m$ according to the following formula :

$$\boldsymbol{X}_m(n) = \begin{cases} \boldsymbol{S}_m(n), & n = 0,1, \ldots, \left\lfloor\frac{K}{2}\right\rfloor - 1 \\ 0, & n = \left\lfloor\frac{K}{2}\right\rfloor \\ \boldsymbol{S}_m(n), & n = \left\lfloor\frac{K}{2}\right\rfloor + 1, \left\lfloor\frac{K}{2}\right\rfloor + 2, \ldots, K - 1 \end{cases} \quad (7)$$

According to the embodiments of the disclosure, the transmitter 10 is advantageously configured to apply Pulse Interval Encoding (PIE) to the coded bits delivered by the encoder 101, prior to OOK modulation by the waveform modulation unit 102 by mapping one pulse in PIE to one OOK symbol.

Advantageously, the PIE scheme may be any PIE scheme, with any length of the ON duration.

The Pulse Interval Encoding (PIE) consists in coding the data so as to deliver a part of the power even if only zeros are transmitted.

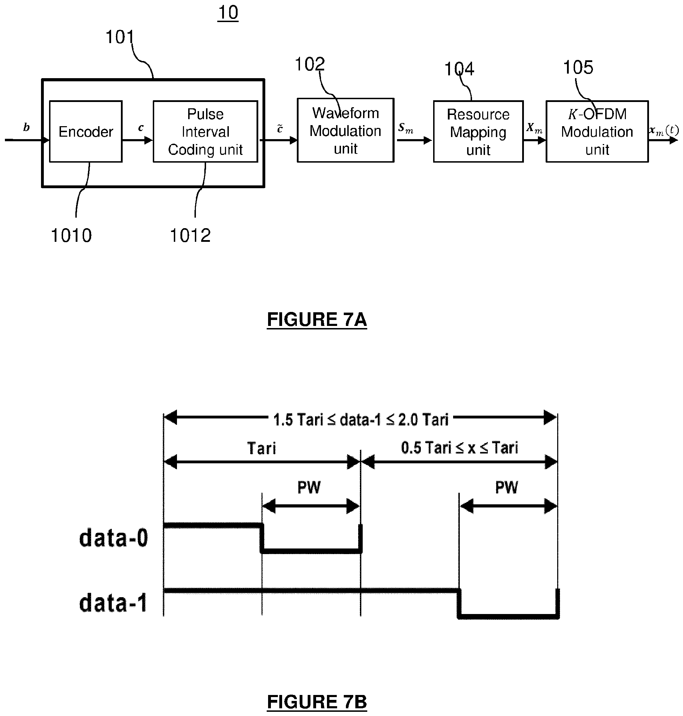

In some embodiments, the encoding unit 101 further comprises a Pulse Interval coding unit 1012 configured to apply PIE to the coded bits delivered by the encoder 1010, as illustrated by figure 7A.

Figure 7A is a block diagram of the transmitter 10 representing the Pulse Interval Coding unit 1010.

The PIE is carried out as part of the encoding unit 101 prior to OOK modulation.

After the $\boldsymbol{b}$ bits are encoded by the encoder 1010 into the encoded bits $\boldsymbol{c}$, the encoded bits $\boldsymbol{c}$ are subsequently passed to the Pulse Interval coding unit 1012 which is configured to code each coded bit $c_i$, i = 0,1, \ldots , C - 1, into pulse interval encoded symbols $\tilde{\boldsymbol{c}}$.

In one embodiment, the pulse interval encoded symbols $\tilde{\boldsymbol{c}}$ may be defined as follows:

$$\tilde{\boldsymbol{c}} = \begin{cases} [1,0], & c_i = 0 \\ [1,1,1,0], & c_i = 1 \end{cases} \quad (8)$$

The encoding according to formula (8) uses three ones's followed by one 0 to encode a one bit, which corresponds to the scheme represented in figure 7B.

Figure 7B depicts the exemplary Pulse Interval Encoding (PIE) defined by formula 8, which is derived from the PIE encoding proposed in GS1 EPC global Inc., "EPC™ Radio-Frequency Identity Protocols Generation-2 UHF RFID, Specification for RFID Air Interface, Version 2.0.0 Ratified," GS1, 2013. In figure 7B, 'PW' refers to the Pulse Width, 'Tari' refers to the time reference interval and x is chosen to comply with regulations. The data-1 signal may consist of any number of consecutive ON-pulses, such as 2, 3 (as in the case of Figure 7B), 4 or more. The longer the ON-duration in the data-1 signal the more power is transmitted to the receiver, at the expense of reduced data rate since data-1 takes longer to transmit.

However, the skilled person will readily understand that the invention is not limited to the PIE of formula 8 and that other types of PIE may by applied by the Pulse Interval Coding unit 1012 depending on power requirements (i.e. how much power is to be delivered). For example and without limitation, the Pulse Interval Coding unit 1012 may apply the pulse interval encoding defined by formula (9):

$$\tilde{c} = \begin{cases} [1,0], & c_i = 0 \\ [1,1,0], & c_i = 1 \; or \\ [1,1,1,1,0], & c_i = 1 \; or \\ [1,1,1,1,1,0], & c_i = 1 \; or \\ [1,1,1,1,1,1,0], & c_i = 1 \; or \\ [1,1,1,1,1,1,1,0], & c_i = 1 \end{cases} \quad (9)$$

The longer the ON duration for the one bits, the more power is delivered (assuming equal number of ones and zeros are transmitted).

Turning back to figure 7A, the delivered coded bits $\tilde{c}$ are then OOK modulated in the waveform modulation unit 102, before resource mapping in the resource mapping unit 104 and OFDM modulation in the OFDM modulation unit 105.

In some embodiments, the waveform modulation unit 102 may only comprise the OOK modulator 102, without using a DFT-precoder 1022. In such embodiments, the OOK sequence is directly mapped to the frequency-domain resources. The PIE encoded bits $\tilde{c}$ are then applied to the simple multi-carrier OOK waveform, without a prior DFT-precoding.

The following description of some embodiments of the disclosure will be mainly made considering that the waveform modulation unit 102 comprises both the OOK modulator 1020 and a DFT-precoder 1022 for illustration purpose only. In such embodiment.

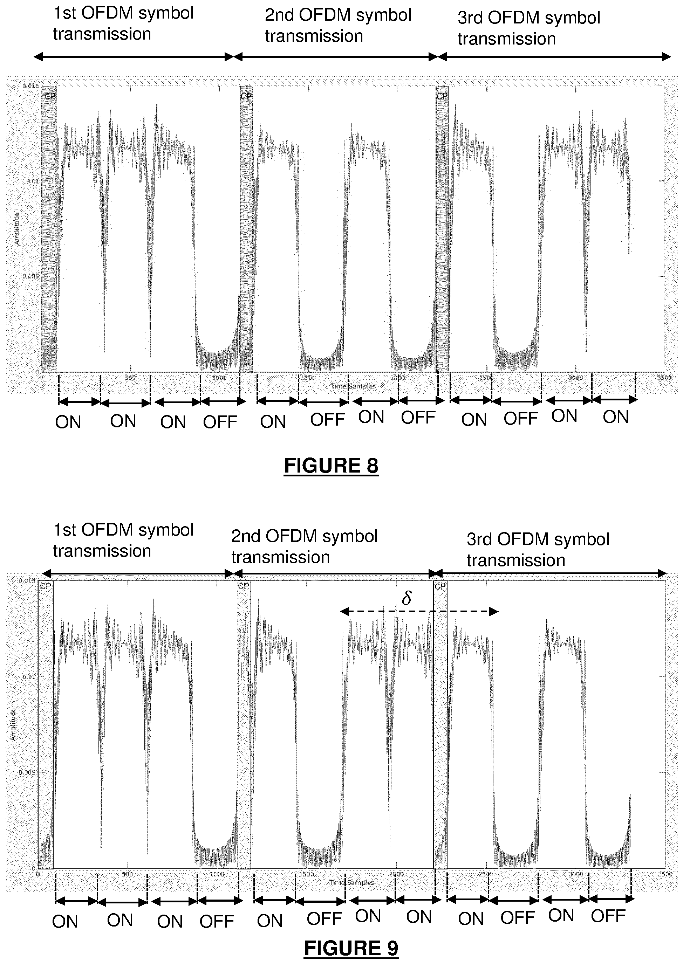

Figure 8 is a diagram representing a waveform received at the receiver device 30, after Radio Frequency (RF) filtering with data-dependent data-rate, in an exemplary application of the disclosure using the PIE of Figure 7B applied to the OFDM transmission, with $M = 4$. In the example of figure 8, the duration of one OOK symbol $T_{OOK}$ is 256 samples, which means that the FFT size $N$ is divided by $M$. Further, in the example of figure 8, the payload is equal to [1 0 0 0 1], 3 OFDM symbols are used and $N = 1024$ .

In figure 8, each sub-diagram starting by CP corresponds to the transmission of one of the three OFDM symbols and the curves inside each sub-diagram correspond to the ON and OFF periods. The last OFDM symbol contains only two OOK symbols of the last bit. The payload is equal to [1 0 0 0 1].

In this PIE scheme, the number of bits transmitted per OFDM symbol depends on the data itself. In a single OFDM symbol, two 0's can be transmitted but only one 1.

Each OFDM transmission sent by the transmitter 10 comprises a cyclic prefix (CP) at the beginning of the transmission of the message. The Cyclic Prefix insertion is needed in any OFDM transmission to mitigate inter-symbol interference at the receiver 30. The data destined to the low-power receiver 30 may be multiplexed with data for regular OFDM receivers 30 within the same OFDM symbol.

As can be seen from the last symbol in figure 8, the CP comprises part of the ON-signal from the end of the OFDM symbol (the first two pulses of a 1 bit). In the case where the receiver 30 is a simple receiver, the receiver 30 is not synchronized and cannot distinguish the CP part of the received signal (hence cannot remove or skip the CP), so that it might be decoded as longer ON-duration with in turn impairs the performance.

Another case is depicted in figure 9, which is a diagram representing an example of a waveform received by the receiver 30 after RF filtering with data-dependent data-rate applying the PIE of figure 7 which is mapped to the OFDM transmission, with $M = 4$. In the example of figure 9, the payload is equal to [0 1 0 1], the FFT $N$ is equal to 1024, and 3 OFDM symbols are used. In figure 9, similarly to figure 8, each sub-diagram starting by CP corresponds to the transmission of one of the three OFDM symbols and the curves inside each sub-diagram corresponds to the ON and OFF periods. In the example of figure 9, the long ON period, denoted $\delta$, of the second OFDM symbol, spanning the last half of the second OFDM symbol and the first half of the third OFDM symbol, is interrupted by the CP which is of (almost) zero-power. Consequently, this could result in an error at the receiver 30.

In the embodiments where the waveform modulation unit 102 only comprises the OOK modulator 102, without using a DFT-precoder 1022, the OOK sequence being directly mapped to the frequency-domain resources, the CP does not raise no issue with the CP, since there is only one OOK symbol per OFDM symbol and there are no two consecutive OFDM symbols carrying an OFF signal.

In the embodiments where the waveform modulation unit 102 comprises the OOK modulator 102, and a DFT-precoder 1022 performing DFT precoding, the transmitter 10 may be adapted to mitigate the impact of the CP, by modifying the last OOK symbol of length $K_B$ sampled in time-domain in the OFDM transmission, before the DFT precoding (performed in block 1022).

In some aspects, the waveform modulation unit 102 may be configured to modify the last $$K_Z = \left\lceil \frac{N_{CP}}{Z} \right\rceil$$ samples of the $K_B$ samples of the last OOK symbol in the OFDM symbol, with $N_{CP}$ designating the number of CP samples inserted at the beginning of the OFDM symbol after OFDM modulation which depends on the symbol number within a slot and $$Z = \frac{N}{K}$$ denoting the oversampling factor of the OOK transmission.

In some embodiments, the last $K_Z$ samples of the last OOK symbol within an OFDM symbol may be modified to be non-zero (i.e. different from zero), i.e. contain energy.

In particular, the value of the non-zero sequence corresponding to the last $K_Z$ samples of the last OOK symbol within an OFDM symbol may be selected to improve or optimize the performance of the receiver 30 as the non-zero sequence directly impacts the receiver performance. More precisely, in some embodiments, the non-zero sequence may be advantageously modified according to target spectral properties, for example where the power spectral density is equally distributed across the OOk sub-carriers. In particular, the non-zero sequence may be modified so that the power is *not* concentrated on the edges of the spectrum, because the band-filter at the receiver may attenuate those frequencies and distort the resulting time-domain waveform.

The embodiments using such a modification of the last $K_Z$ samples of the last OOK symbol within an OFDM symbol is adapted to the use of any PIE as long the ON duration is followed by a *single* OFF period independent of the number of OOK symbols per OFDM symbol.

Alternatively, the OOK modulator 1020 of the waveform modulation unit 102 may be configured to insert a sequence to the end of the last OOK symbol.

In one embodiment, the OOK modulator 1020 of the waveform modulation unit 102 may be configured to insert first $K_z$ samples of the ON-signal to the end of the last OOK symbol. This may be performed by the OOK modulator 1020 by copying the first $K_z$ samples of the ON signal to the end of the last OOK symbol regardless of the data transmitted. The ON-symbol sequence may be a Zadoff-Chu sequence.

The OOK modulator 1020 of the waveform modulation unit 102 may advantageously use part of an already existing sequence (comprising the samples of the ON signal) in embodiments where the transmitter 10 has already such existing sequence stored in memory.

In another embodiment, the OOK modulator 1020 of the waveform modulation unit 102 may be configured to only insert first $K_z$ samples of the ON-signal to the end of the last OOK symbol, if the last OOK symbol is an OFF signal, i.e. all zeros. In case the last OOK symbol is an ON signal, it already contains power.

According to another embodiment, the OOK modulator 1020 of the waveform modulation unit 102 may be configured to insert randomly modulated symbols to the end of the last OOK symbol. The randomly modulated symbols may be symbols modulated according to a modulation technique that varies the high frequency carrier signal in accordance with the instantaneous value of another signal, such as for example and without limitations QAM (Quadrature Amplitude Modulation) or BPSK(Binary Phase-Shift Keying).

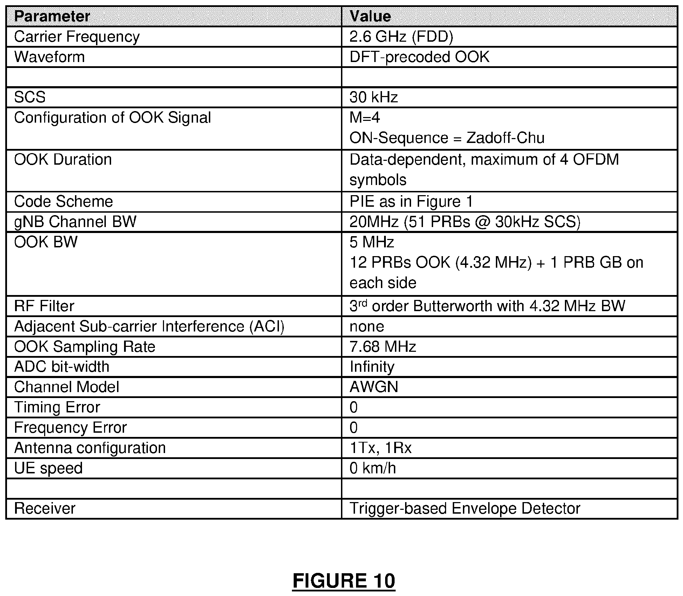

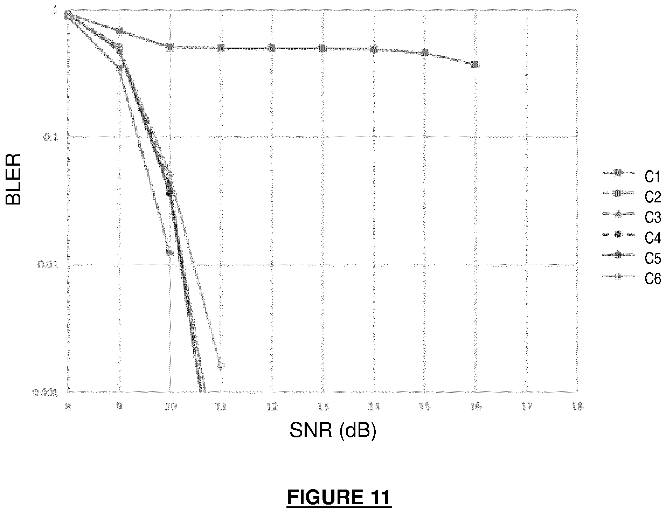

Figure 10 is a table presenting general simulation assumptions used to simulate the performance of the transmitter according to some embodiments of the invention, and figure 11 is a diagram showing the BLER performance in an AWGN channel with respect to the SNR (in dB) for different embodiments of the invention in comparison with the optimal scheme, using the assumptions of the table of figure 10. The BLER denotes the Block Error Rate corresponding to the ratio of the number of erroneous blocks to the total number of blocks transmitted by the transmitter 10.

In figure 11:

- The curve C1 corresponds to Perfect CP removal which corresponds to the optimal scheme;
- The curve C2 corresponds to the embodiments of the disclosure which do not use CP removal;
- The curve C3 corresponds to the embodiments of the disclosure which use the insertion of first $K_z$ samples (Short CP);
- The curve C4 corresponds to the to the embodiments of the disclosure which use a conditional Insertion of first $K_z$ samples (Short CP) if the last OOK symbol is zero;

- The curve C5 corresponds to the embodiments of the disclosure which use the insertion of first $K_z$ samples (Short CP), with the CP length being unknown at the receiver; and
- The curve C6 corresponds to the embodiment of the disclosure which uses insertion of QPSK samples (Short CP).

In figure 11, it can be observed that the proposed solutions perform close to the optimal scheme (perfect CP Removal represented by curve C1). Further, it can be observed that the embodiment using insertion of random QPSK symbols (curve C6) perform slightly worse than the embodiment using insertion of ON-symbols, because the ON-symbol sequence is a Zadoff-Chu sequence with better spectral properties (curve C3). Moreover, it can be observed that knowledge of the CP length at the receiver (illustrated by curve C5) has no impact on its performance.

Embodiments of the disclosure therefore enable to generate a PIE encoded waveform in an OFDM transmission by utilizing a DFT-precoded Multi-carrier OOK modulation.

Embodiments of the disclosure also enable handling the CP for reception with a simple low-power receiver without OOK symbol synchronization by modifying a DFT-precoded Multi-carrier OOK modulation, or a Multi-carrier OOK modulation (if no DFT-precoding is performed), or by inserting samples in at least one OOK symbol within an OFDM symbol of the DFT-precoded Multi-carrier OOK waveform, or the Multi-carrier OOK waveform (if no DFT-precoding is performed).

The encoding schemes proposed according the embodiments of the disclosure further enable delivering configurable data rates and power to a simple receiver in a OFDM system.

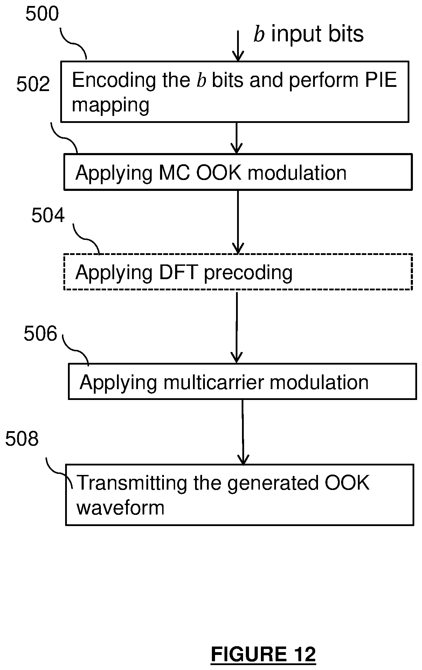

Figure 12 is a flowchart depicting a method for generating and transmitting a PIE encoded waveform at the transmitter, according to embodiments of the invention.

In step 500, the input bits $b = [b_0, b_1, \ldots, b_{B-1}]$ are received and encoded into the encoded bits $c$. Step 500 further comprises applying Pulse interval encoding to the $c$ encoded bits to map the pulses to the OOK symbols in the OFDM transmission.

In step 502, MC-OOK modulation is applied to the encoded bit $c$, which provides a MC-OOK modulated signal $s_m$ for the message $m$, the signal $s_m$ comprising $B$ elements $s_i$. The MC-OOK modulation step 502 comprises mapping a ON-signal $a$ comprising $K_B$ elements such as $a = [a_0, a_1, \ldots, a_{KB-1}]$ to each element $s_i$ of the MC-OOK modulated signal $s_m$ whenever the corresponding input bit $b_i$ is equal to one, and a value zero otherwise, the ON-signal a being a complex sequence.

In step 504, Discrete Fourier Transform (DFT) precoding may be applied to the signal $s_m$, which provides a resulting signal $S_m$.

In step 506, single or multicarrier modulation is applied to the resulting signal $\boldsymbol{X}_m$ provided by the PIE mapping step.

In step 508, a message derived from the signal $\boldsymbol{x}_m(t)$ determined by the single or multicarrier modulation unit 105 is transmitted to the receiver 30 using one or more transmit antennas.

In some embodiments, step 502 may comprise modifying the last $K_Z = \left\lceil \frac{N_{CP}}{Z} \right\rceil$ samples of the $K_B$ samples of the last OOK symbol in an OFDM symbol, with $N_{CP}$ designating the number of CP samples inserted at the beginning of the OFDM symbol after OFDM modulation which depends on the symbol number within a slot and $Z = \frac{N}{K}$ denoting the oversampling factor of the OOK transmission. The last $K_Z$ samples of the last OOK symbol within an OFDM symbol may be for example modified to be non-zero (i.e. different from zero), i.e. contain energy.

Alternatively, step 502 may comprise inserting a sequence to the end of the last OOK symbol. The inserted sequence may be the first $K_z$ samples of the ON-signal, or randomly modulated symbols.

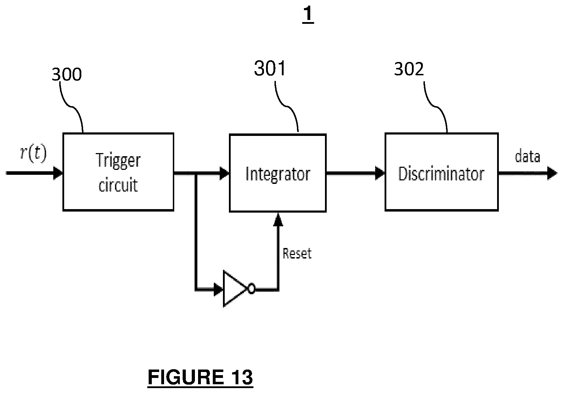

Figure 13 represents a passive receiver according to embodiments of the invention.

The receiver 30 may be implemented as an envelope detector configured to perform envelope detection from a signal $r(t)$ derived from the message received from the transmitter 10. Therefore, the reference 30 will be used hereinafter to refer to the envelope detector.

The signal $r(t)$ is a base-band signal determined from the message by successively applying processing steps to the message (e.g. conversion to baseband, filtering and sampling).

The Envelope Detector 30 may use the received energy corresponding to each candidate signal for detection and determination of an estimate $\hat{m}$ of the received WUS message.

The receiver 30 is a "triggered receiver" that may be used to receive and decode the OOK waveform from the transmitter 10.

The output of the envelope detector circuit r(t) passes through a trigger circuit 300, which changes state at the beginning of an ON-pulse and resets an integrator 301, which starts accumulating energy as long as the signal is ON. On the next transition from OFF to ON (low to high voltage), the integrator 301 is reset again and the accumulated energy is passed to a discriminator 302. The discriminator 302 applies a threshold and decides 1, if the energy was higher (ON for a longer time) or 0 if it was ON for a shorter time.

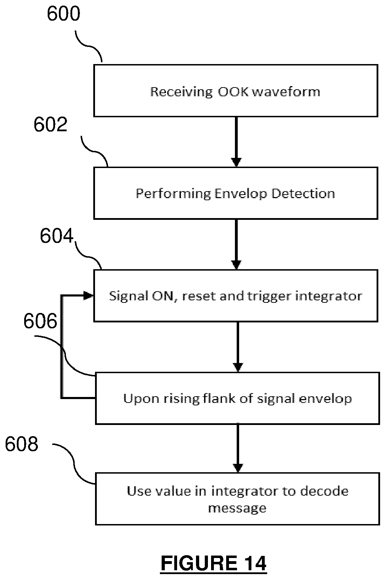

Figure 14 is a flowchart depicting a method for receiving and decoding a OOK waveform received from the transmitter 10, at a PIE receiver 30, according to some embodiments.

In step 600, the OOK waveform is received from the transmitter 10 and preprocessed to provide a signal r(t) derived from the received WUS message.

In step 602, envelope detection is perform using the signal $r(t)$ derived from the received OOK waveform, the signal $r(t)$ being a signal $r(t)$ determined from the OOK waveform.

In step 604, if the signal is ON, energy accumulation is started upon a rising flank of the incoming OOK waveform message, and the triggered integrator 301 is reset in step 606. Steps 604 and 606 are iterated on next transition from OFF to ON.

In step 608, the value of the triggered integrator is used to decode the message (by comparing it to the threshold to determine the value 1 or 0 depending on the value of the triggered integrator).

The communication system 100 according to the embodiments of the invention may be used in various applications such as Machine-To-Machine (M2M), Web-of-Things (WoT), and Internet of Things (IoT) (for example vehicle-to-everything V2X communications) involving networks of physical devices, machines, vehicles, home alliances and many other objects connected to each other and provided with a connectivity to the Internet and the ability to collect and exchange data without requiring human-to-human or human-to-computer interactions.

For example, in IoT applications, the communication system 100 may be a wireless network, for example a wireless IoT/M2M network representing low energy power-consumption/long battery life/low-latency/low hardware and operating cost/high connection density constraints such as low-power wide area networks and low-power short-range IoT networks. Exemplary technologies used in such applications may comprise 5G, LTE-NB1 (Long Term Evolution-Machine to Machine, Narrow Band) and NB-IoT (NarrowBand IoT).

The communication system 100 may be used in various consumer, commercial, industrial, and infrastructure applications. Exemplary consumer applications comprise connected vehicles (Internet of Vehicles IoV), home automation/smart home, smart cities, wearable technology, and connected health. Exemplary commercial applications comprise medical and healthcare and transportation. In the medical field, a digitized healthcare system connecting medical resources and healthcare services may be used in which special monitors and sensors are used to enable remote health monitoring and emergency notification. Exemplary industrial applications comprise applications in agriculture, for example in farming using sensors, to collect data on temperature, rainfall, humidity, wind speed, and soil content. Exemplary infrastructure applications may comprise the use of IoT devices to perform monitoring and controlling operations of urban and rural infrastructures such as bridges and railway tracks.

A wireless device 1 may be any physical internet-enabled device/object provided with required hardware and/or software technologies enabling communication over Internet. A wireless device 1 may be any standard internet connected-devices such as desktop computers, servers, virtual machines laptops, smart-phones, tablets. In some applications, the wireless device 1 may be any IoT/M2M device or connected device operating in an IoT/M2M network such as medical devices, temperature and weather monitors, connected cards, thermostats, appliances, security devices, drones, smart clothes, eHealth devices, robots, and smart outlets.

Embodiments of the present invention can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

It should be noted that the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

While embodiments of the invention have been illustrated by a description of various examples, and while these embodiments have been described in considerable detail, it is not the intent of the applicant to restrict or in any way limit the scope of the appended claims to such detail.

Additional advantages and modifications will readily appear to those skilled in the art. The invention in its broader aspects is therefore not limited to the specific details, representative methods, and illustrative examples shown and described.

**Claims**

1. A wireless device (1) in a communication system (100), the wireless device comprising a transmitter (4) configured to transmit a message $m = 0,1, ... , 2^B - 1$ from an input bit vector $b$ comprising $B$ input bits $b_i$ through a communication channel using single or multi-carrier modulation, the transmitter (4) comprising a set of transmit antennas, wherein the transmitter comprises :

   - an encoding unit (101) comprising an encoder (1010) configured to encode the $B$ bits on the input bit vector, which provides $C$ coded bits forming an encoded vector $c$;
   - A waveform modulation unit (102) configured to modulate the $C$ coded bits delivered by the encoding unit (101) onto $L$ consecutive OFDM symbols, each carrying $M$ OOK symbols, $M$ corresponding to the number of OOK symbols per OFDM symbol;
   - a resource mapping unit (104) configured to map the modulated signal delivered by the waveform modulation unit to frequency-domain resources $X_m$ of $N$ sub-carriers;
   - an OFDM modulation unit (105) configured to apply OFDM modulation to the resulting signal $X_m$, which provides a time-domain base-band signal $x_m(t)$;
   the transmitter (4) being configured to send a OFDM transmission derived from the signal $x_m(t)$ determined by the OFDM modulation unit (105) on sub-carriers, using one or more transmit antennas, wherein said OFDM transmission comprises one or more OOK symbols and OFDM symbols;
   wherein the encoding unit (101) further comprises a Pulse Interval Coding (PIE) unit configured to apply a Pulse Interval Encoding (PIE) to the coded bits delivered by the encoder (1010) to map one PIE pulse to one OOK symbol.

2. The wireless device (1) of claim 1, wherein the waveform modulation unit (102) comprises a Multi-Carrier On-Off Keying (MC-OOK) modulator (1020) configured to apply a MC-OOK modulation to the output of the encoding unit (101), which provides a MC-OOK sequence $s_m$ for the message $m$, the signal $s_m$ comprising $B$ elements $s_i$.

3. The wireless device (1) of claim 2, wherein the MC-OOK modulator (1022) is configured to map a ON-signal $a$ comprising $K_B$ elements such as $a = [a_0, a_1, ..., a_{KB-1}]$ to each element $s_i$ of the MC-OOK modulated signal $s_m$ whenever the corresponding input bit $b_i$ is equal to one, and a zero value otherwise, the ON-signal a being a complex sequence.

4. The wireless device (1) of any preceding claim 1 and 2, wherein the waveform modulation unit (102) comprises a Discrete Fourier Transform (DFT) precoder (1022) configured to apply DFT-precoding to the signal $s_m$, which provides a resulting signal $S_m$.

5. The wireless device (1) according to claim 1 to 4, wherein the transmitter (10) is configured to modify the last OOK symbol of length $K_B$ sampled in time-domain in the OFDM transmission.

6. The wireless device (1) according to claim 1 to 4, wherein the transmitter is configured to modify the last

   $$K_Z = \left\lceil \frac{N_{CP}}{Z} \right\rceil$$ samples of the $K_B$ samples of the last OOK symbol within an OFDM symbol, with $N_{CP}$ designating the number of cyclic prefix samples inserted at the beginning of the OFDM symbol after the OFDM modulation.

7. The wireless device (1) according to any claim 5 and 6, wherein the last $K_Z$ samples of the last OOK symbol within the OFDM symbol are modified to be non-zero.

8. The wireless device (1) according to claim 7, wherein the value of the non-zero sequence is selected according to target spectral properties.

9. The wireless device (1) according to claim 8, wherein the PIE is selected such that a ON duration is followed by a single OFF period, independently of the number of OOK symbols per OFDM symbol.

10. The wireless device (1) according to any preceding claim 2 to 6, wherein the OOK modulator (1020) is configured to insert a sequence to the end of the last OOK symbol.

11. The wireless device (1) according to claim 10, wherein the OOK modulator (1020) is configured to insert first $K_z$

samples of the ON-signal to the end of the last OOK symbol.

12. The wireless device (1) according claim 11, wherein the OOK modulator (1020) is configured to use part of an already existing sequence comprising the samples of the ON-signal.

13. The wireless device (1) according to any preceding claim 2 to 4, wherein the OOK modulator (1020) is configured to only insert first $K_z$ samples of the ON-signal to the end of the last OOK symbol, if the last OOK symbol is an OFF signal.

14. The wireless device (1) according to any preceding claim 2 to 4, wherein the OOK modulator (1020) is configured to insert randomly modulated symbols to the end of the last OOK symbol, the randomly modulated symbols being symbols modulated according to a modulation technique such as a Quadrature Amplitude Modulation QAM or a Binary Phase-Shift Keying BPSK technique.

15. A method implemented in a communication system (100), for transmitting a message $m = 0,1, ... , 2^B - 1$ from an input bit vector $b$ comprising $B$ input bits $b_i$ through a communication channel using single or multi-carrier modulation, wherein the method comprises:

    - encoding the $B$ bits on the input bit vector, which provides $C$ coded bits forming an encoded vector $c$;
    - modulating the output of the encoding step onto $L$ consecutive OFDM symbols, each carrying $M$ OOK symbols, $M$ corresponding to the number of OOK symbols per OFDM symbol;
    - mapping the modulated signal delivered by modulation step to frequency-domain resources $X_m$ of $N$ sub-carriers;
    - applying OFDM modulation to the resulting signal $X_m$, which provides a time-domain base-band signal $x_m(t)$, the method comprising sending an OFDM transmission derived from the signal $x_m(t)$ determined in the OFDM modulation step on sub-carriers, using one or more transmit antennas, wherein said OFDM transmission comprises one or more OOK symbols and OFDM symbols,
    wherein the encoding step further comprises applying a Pulse Interval Encoding (PIE) to the coded bits $c$ to map one PIE pulse to one OOK symbol.

**100**

2

1

BS

1T

1R

UE

3

UE

**FIGURE 1**

**100**

10

3

30

| Transmitter | Communication channel | Receiver |

**FIGURE 2**

| CP | OFDM symbol | CP | OFDM symbol | ... | CP | OFDM symbol |
|----|-------------|----|-------------|-----|----|-------------|

$T_{CP}$     $T_{OFDM}$

**FIGURE 3**

10

101     102          104              105

$b$ → Encoding unit → $c$ → Waveform modulation unit → $S_m$ → Resource Mapping unit → $X_m$ → Single or multi-carrier Modulation Unit → $x_m(t)$

**FIGURE 4**

102    1020                    1022

$c$ → | OOK Modulator | → $S_m$ → | DFT-precoder | → $S_m$ →

**FIGURE 5**

10

Other Transmission
OOK ON Symbol
Potential Guard Band

$B$ bits → | Signal generation | → 

$K$

$K_B$

$b_0 = 1$  $b_1 = 0$  $b_2 = 1$  $b_3 = 1$

OOK symbol

→ | DFT-precoder | 

OOK BW

Mapping

→ | Single or multi-carrier Modulation Unit | →

$b_0 = 1$   $b_2 = 1$  $b_3 = 1$
$b_1 = 0$

N/8 samples

101         1020         1022         104         105

**FIGURE 6**

**FIGURE 7A**

**FIGURE 7B**

1st OFDM symbol transmission    2nd OFDM symbol transmission    3rd OFDM symbol transmission

ON  ON  ON  OFF  ON  OFF  ON  OFF  ON  OFF  ON  ON

**FIGURE 8**

1st OFDM symbol transmission    2nd OFDM symbol transmission    3rd OFDM symbol transmission

$\delta$

ON  ON  ON  OFF  ON  OFF  ON  ON  ON  OFF  ON  OFF

**FIGURE 9**

| Parameter | Value |
|---|---|
| Carrier Frequency | 2.6 GHz (FDD) |
| Waveform | DFT-precoded OOK |
| | |
| SCS | 30 kHz |
| Configuration of OOK Signal | M=4<br>ON-Sequence = Zadoff-Chu |
| OOK Duration | Data-dependent, maximum of 4 OFDM symbols |
| Code Scheme | PIE as in Figure 1 |
| gNB Channel BW | 20MHz (51 PRBs @ 30kHz SCS) |
| OOK BW | 5 MHz<br>12 PRBs OOK (4.32 MHz) + 1 PRB GB on each side |
| RF Filter | 3$^{rd}$ order Butterworth with 4.32 MHz BW |
| Adjacent Sub-carrier Interference (ACI) | none |
| OOK Sampling Rate | 7.68 MHz |
| ADC bit-width | Infinity |
| Channel Model | AWGN |
| Timing Error | 0 |
| Frequency Error | 0 |
| Antenna configuration | 1Tx, 1Rx |
| UE speed | 0 km/h |
| | |
| Receiver | Trigger-based Envelope Detector |

## FIGURE 10

**FIGURE 11**

500

$b$ input bits

502 | Encoding the $b$ bits and perform PIE mapping

Applying MC OOK modulation

504

Applying DFT precoding

506

Applying multicarrier modulation

508

Transmitting the generated OOK waveform

**FIGURE 12**

**1**

**FIGURE 13**

600

Receiving OOK waveform

602

Performing Envelop Detection

604

Signal ON, reset and trigger integrator

606

Upon rising flank of signal envelop

608

Use value in integrator to decode
message

**FIGURE 14**

| | Europäisches Patentamt<br>European Patent Office<br>Office européen des brevets | **EUROPEAN SEARCH REPORT** | **Application Number**<br>EP 24 30 5273 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | SEBASTIAN WAGNER ET AL: "Discussion on L1 signal design and procedure for low power WUS",<br>3GPP DRAFT; R1-2301133; TYPE DISCUSSION; FS_NR_LPWUS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>vol. 3GPP RAN 1, no. Athens, GR; 20230227 - 20230303<br>17 February 2023 (2023-02-17),<br>XP052248272,<br>Retrieved from the Internet:<br>URL:https://www.3gpp.org/ftp/TSG_RAN/WG1_RL1/TSGR1_112/Docs/R1-2301133.zip<br>R1-2301133_AI_9_13_3-L1 signal design and procedure for low power WUS.docx<br>[retrieved on 2023-02-17] | 1-7,15 | INV.<br>H04L27/02<br>H04L27/26 |
| A | * paragraph [02.3] * | 8-14 | |
| | ----- | | |
| A | Dobkin Daniel: "RFID Basics: Modulation and Multiplexing - EE Times",<br>EEtimes,<br>26 September 2007 (2007-09-26), pages 1-10, XP093183275,<br>Retrieved from the Internet:<br>URL:https://www.eetimes.com/radio-basics-for-rfid-modulation-and-multiplexing/<br>* page 3 - page 5 * | 1-15 | **TECHNICAL FIELDS<br>SEARCHED (IPC)**<br><br>H04L |
| | ----- | | |
| | -/-- | | |

The present search report has been drawn up for all claims

| Place of search | Date of completion of the search | Examiner |
|---|---|---|
| Berlin | 10 July 2024 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 1 of 2

| | Europäisches<br>Patentamt<br>European<br>Patent Office<br>Office européen<br>des brevets | **EUROPEAN SEARCH REPORT** | **Application Number**<br>EP 24 30 5273 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | DAVID BHATOOLAUL ET AL: "L1 signal design and procedures for low power WUS",<br>3GPP DRAFT; R1-2300700; TYPE DISCUSSION; FS_NR_LPWUS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>vol. 3GPP RAN 1, no. Athens, GR; 20230227 - 20230303<br>17 February 2023 (2023-02-17),<br>XP052247846,<br>Retrieved from the Internet:<br>URL:https://www.3gpp.org/ftp/TSG_RAN/WG1_RL1/TSGR1_112/Docs/R1-2300700.zip R1-2300700.docx<br>[retrieved on 2023-02-17]<br>* paragraph [2.1.3.1.2] - paragraph [2.1.3.1.2.1] * | 1-15 | |

-----

TECHNICAL FIELDS
SEARCHED     (IPC)

The present search report has been drawn up for all claims

| Place of search | Date of completion of the search | Examiner |
|---|---|---|
| Berlin | 10 July 2024 | Douglas, Ian |

EPO FORM 1503 03.82 (P04C01)

page 2 of 2